# FASCICULE DE BREVET EUROPEEN

(11) **EP 0 964 358 B1**
(45) Date de publication et mention de la délivrance du brevet: **25.03.2009**
(21) Numéro de dépôt: 99401381.1
(22) Date de dépôt: 09.06.1999
(51) Int. Cl.: G06K 13/08

(54) **Agencement pour le blocage longitudinal d'un support de données dans un dispositif d'échange de données**
Anordnung zum longitudinalen Blockieren eines Datenträgers in einer Datenaustausch-Vorrichtung
Arrangement for longitudinally blocking a data carrier in a device for data exchange

(30) Priorité: 09.06.1998 FR 9807250
(43) Date de publication de la demande: 15.12.1999
(73) Titulaire: VALEO SECURITE HABITACLE S.A.S., 94042 Créteil Cédex (FR); RENAULT S.A.S., 92100 Boulogne Billancourt (FR)
(72) Inventeur: Canard, Louis, 58000 Nevers (FR); Garcin, Philippe, 58180 Marzy (FR)
(74) Mandataire: Kohn, Philippe

(56) Documents cités:
- FR-A- 2 713 173
- US-A- 4 443 049
- US-A- 4 796 355
- US-A- 5 043 562

## Description

La présente invention concerne un agencement pour l'échange de données entre un support de données rigide, ou semi-rigide, et un dispositif d'échange de données, notamment de lecture de données contenues dans le support.

L'invention concerne plus particulièrement un tel agencement destiné à équiper un véhicule automobile et dans lequel le support de données, qui est par exemple en forme de carte ou de badge globalement rectangulaire, porte des données d'identification de l'utilisateur du véhicule qui l'autorisent lorsqu'il introduit son badge dans le dispositif de lecture, à utiliser le véhicule en lui permettant notamment de procéder au démarrage du moteur du véhicule.

On connaît de nombreux exemples de tels agencements dans lesquels le support de données est une carte rigide ou semi-rigide comportant par exemple un circuit intégré, ou puce, qui est relié à des moyens de lecture du dispositif par des contacts électriques et/ou par une antenne d'échange de données.

Lors de l'introduction du badge ou de la carte dans le dispositif, celle-ci est introduite manuellement dans un logement du boîtier dans lequel le support de données occupe une position active déterminée, et le dispositif qui reçoit la carte ou le badge comporte des moyens pour retenir longitudinalement ce support de données en position active dans le boîtier de manière que l'échange de données soit assuré dans de bonnes conditions.

Selon la conception la plus répandue, ces moyens de retenue sont constitués par des simples freins, c'est-à-dire qu'il s'agit de pattes déformables élastiquement qui coopèrent par friction avec des bords latéraux et/ou avec les grandes faces de la carte.

Une telle conception des moyens de retenue du support de données dans le dispositif de lecture n'est pas entièrement satisfaisante dans le cas d'une application à un véhicule automobile dans lequel le dispositif est soumis, lors du roulage, à de nombreuses vibrations qui provoquent progressivement l'éjection du support de données, ou tout au moins son déplacement par rapport à sa position active dite de lecture.

De plus, dans le cas d'une application à un véhicule automobile, il est nécessaire de pouvoir non seulement retenir le support de données en position active, mais aussi le verrouiller en le bloquant dans cette position, en réponse à un ordre de commande de verrouillage, de manière à éviter que dans certaines configurations d'utilisation du véhicule, le conducteur ou un passager puisse extraire inopinément le support de données du dispositif de lecture.

Afin d'améliorer le confort d'utilisation d'un tel agencement, il a déjà été proposé de prévoir des moyens d'assistance à l'introduction et/ou à l'extraction du support de données dans le dispositif.

A cet effet, il a déjà été proposé que le dispositif comporte un tiroir motorisé dans lequel la carte est mise en place manuellement et qui est ensuite commandée électriquement en déplacement entre sa position de repos dans laquelle on introduit la carte et une position active de lecture dans laquelle le tiroir amène la carte en regard de moyens de lecture.

Une telle conception est complexe et lourde et peu adaptée à son intégration dans le cadre d'une application à un véhicule automobile.

En vue de prévoir des moyens d'assistance à l'éjection, il a aussi été proposé de nombreuses applications dans lesquelles l'utilisateur, lors de l'introduction, agit à l'encontre d'un ressort de rappel qui accumule de l'énergie, la carte étant bloquée en position active par des moyens commandés de retenue, le ressort préalablement bandé restituant l'énergie en vue d'assister l'extraction de la carte, cette assistance pouvant aboutir jusqu'à une éjection complète hors du logement du boîtier.

Une telle conception n'est pas non plus entièrement satisfaisante dans la mesure où elle nécessite un effort important en fin de course d'introduction de la carte et dans la mesure où les moyens connus de retenue à l'encontre de l'effort appliqué à la carte par le dispositif élastique de rappel ne sont pas adaptés à une application à un véhicule automobile, les vibrations lors du roulage risquant de provoquer leur déclenchement et l'éjection inopinée et dangereuse de la carte.

Le document US-A-5,043,562 décrit et représente un agencement pour retenir un support de données dans un dispositif de lecture/écriture qui comporte des moyens pour retenir longitudinalement le support de données en position active dans le boîtier, et des moyens d'assistance à l'introduction et à l'extraction du support de données. Ces moyens de retenue comportent une fenêtre formée dans le support de données et un levier de blocage qui est monté pivotant autour d'un axe. Ce levier de blocage est rappelé élastiquement vers sa position stable de blocage du support de données qu'il retient par l'intermédiaire d'un doigt de blocage formé à l'extrémité libre du levier et qui s'étend à l'intérieur de la fenêtre.
Dans ce document, il est toutefois nécessaire pour procéder à l'extraction d'agir par l'intermédiaire d'un électroaimant, à l'encontre du ressort de traction qui rappelle le levier de blocage vers sa position stable de blocage pour dégager celui-ci et l'amener vers une position escamotée.

Afin de remédier aux inconvénients qui viennent d'être mentionnés, l'invention propose un agencement pour l'échange de données entre un support de données rigide, ou semi-rigide, et un dispositif d'échange de données, comportant un boîtier dans lequel le support en forme générale de carte est introduit manuellement dans un logement du boîtier dans lequel il occupe une position active déterminée, et dans lequel le dispositif comporte des moyens pour retenir longitudinalement le support de données en position active dans le boîtier et des moyens d'assistance à l'introduction et à l'extraction du support de données, le support de données comportant une fenêtre, caractérisé en ce que le boîtier comporte un levier de blocage du support qui est monté pivotant, autour d'un axe, entre une position stable de blocage vers laquelle le levier de blocage est rappelé élastiquement et dans laquelle un doigt de blocage formé à l'extrémité libre d'un bras du levier de blocage s'étend verticalement à l'intérieur de la fenêtre, et une position stable escamotée vers laquelle le levier est rappelé élastiquement et dans laquelle le doigt de blocage est situé hors de la fenêtre pour permettre l'extraction du support de données hors du boîtier.

Selon d'autres caractéristiques de l'invention :
- le levier de blocage est parallèle au plan dans lequel est située la direction longitudinale d'introduction du support de données
- le levier de blocage est rappelé élastiquement vers ses deux positions stables de blocage et escamotée par un ressort bistable ;
- l'axe de pivotement du levier de blocage est perpendiculaire à la direction longitudinale d'introduction du support de données ;
- lors de l'introduction du support de données dans le boîtier, le pivotement du levier de blocage, à partir de sa position stable escamotée, est commandé par la coopération d'un bord transversal avant du support de données avec un profil de came arrière d'un doigt de commande du levier de blocage qui est décalé angulairement par rapport au doigt de blocage ;
- lors de l'extraction du support de données, le pivotement du levier de blocage, à partir de sa position stable de blocage, est commandé par la coopération d'un bord transversal avant de la fenêtre avec un profil de came avant du doigt de blocage ;
- en position de blocage du levier de blocage, la distance longitudinale séparant le profil de came arrière du doigt de commande et le profil de came avant du doigt de blocage est sensiblement égale à la distance longitudinale séparant le bord transversal avant du support de données du bord transversal avant de la fenêtre ;
- le dispositif comporte un organe commandé de verrouillage du levier de blocage dans sa position angulaire de blocage du support de données ;
- l'organe commandé de verrouillage est un électroaimant dont le noyau mobile constitue un doigt de verrouillage qui peut être commandé en saillie à l'extérieur du boîtier de l'électroaimant pour s'étendre en regard d'une partie du levier de blocage afin d'empêcher la rotation de ce dernier de sa position de blocage vers sa position escamotée ;
- l'axe de déplacement du noyau mobile de l'électroaimant est parallèle à l'axe de pivotement du levier de blocage ;
- le ressort bistable est un ressort en fil en épingle à cheveux dont un premier brin principal transversal traverse un trou excentré du levier de blocage, et dont le second brin transversal principal se prolonge par un coude à 180° puis par un brin transversal d'articulation qui traverse le corps du levier de blocage pour constituer l'axe d'articulation de ce levier ;
- l'agencement équipe un véhicule automobile dont les fonctions d'antivol sont partiellement ou totalement assurées par traitement de données dont certaines, contenues dans le support de données, sont représentatives d'un utilisateur autorisé, ou d'un groupe d'utilisateurs autorisés, du véhicule.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective à grande échelle qui illustre certains des principaux composants d'un agencement conforme aux enseignements de l'invention et sur laquelle le badge support de données est illustré dans sa position longitudinale active dans laquelle il est bloqué par le doigt de blocage du levier de blocage, celui-ci n'étant pas encore verrouillé par l'organe de verrouillage ;
- la figure 2 est une vue latérale, en section longitudinale partielle, des composants illustrés à la figure 1 sur laquelle le levier de blocage est illustré dans sa position stable escamotée avec le badge formant support de données qui l'accoste lors de son introduction ;
- la figure 3 est une vue similaire à celle de la figure 1 qui illustre une position intermédiaire du levier de blocage et du badge au cours de l'introduction de ce dernier ; et
- la figure 4 est une vue similaire à celles des figures 2 et 3 sur laquelle le levier de blocage est dans sa position de blocage avec le badge en position active de lecture.

Dans la description qui va suivre, les termes "vertical", "horizontal", "supérieur", "inférieur", "avant", "arrière", etc. sont utilisés en référence aux figures pour faciliter la compréhension de la description et des revendications et ceci à titre non limitatif.

L'agencement 10 conforme aux enseignements de l'invention illustré sur les figures est constitué pour l'essentiel par un support de données ou badge 12 et par un boîtier 14 dont on a seulement représenté une plaque inférieure 16.

Le badge 12 est ici un élément rigide de forme générale rectangulaire et d'épaisseur réduite qui comporte, au voisinage de son bord longitudinal arrière (non représenté), une partie de préhension permettant de le manipuler et notamment de le faire coulisser parallèlement à son plan général.

Le badge 12 est un support de données qui est susceptible d'être introduit longitudinalement, c'est-à-dire selon la direction I parallèle au plan général de ses grandes faces supérieure 18 et inférieure 20, dans le boîtier 14 et qui est susceptible d'être extrait de ce boîtier selon la même direction dans le sens opposé.

Les moyens de guidage en coulissement du badge 12 dans le boîtier 14, qui sont de conception générale connue, ne sont pas représentés sur les figures et ne seront pas décrits en détail.

Comme on peut le voir sur les figures, le badge 12 comporte à sa partie avant, et au voisinage de son bord transversal avant 22, une fenêtre 24 de contour rectangulaire et dont les côtés sont parallèles à ceux du badge 12.

La fenêtre 24 s'étend verticalement dans le badge et le transverse de part en part.

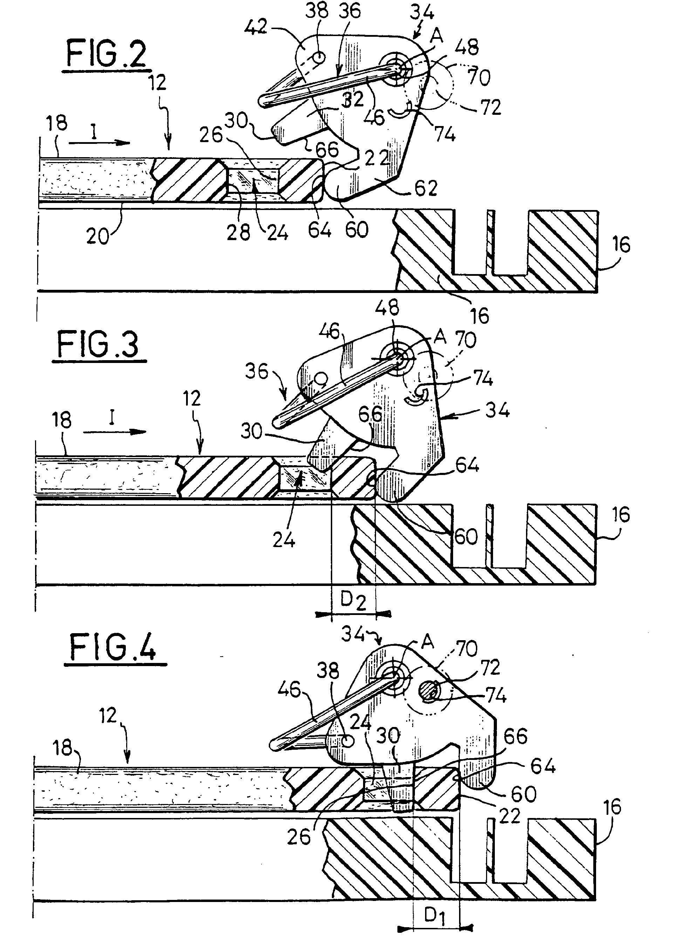

Plus particulièrement, et comme on peut le voir notamment sur la figure 2, la fenêtre 24 est délimitée longitudinalement par deux bords transversaux parallèles avant 26 et arrière 28, ces deux bords comportant des chanfreins supérieurs et inférieurs comme on peut le voir sur les figures.

La fenêtre 24 est une fenêtre de blocage au sens de l'invention, c'est-à-dire qu'elle est destinée à recevoir un organe de blocage porté par le boîtier 14 et qui va maintenant être décrit en détail en référence aux figures.

L'organe de blocage du badge 12 en position active est un doigt de blocage 30 formé à l'extrémité libre d'un bras de blocage 32 appartenant à un levier de blocage 34 qui est monté pivotant par rapport au boîtier autour d'un axe transversal A qui est perpendiculaire à la direction I et parallèle au plan qui contient cette direction I, c'est-à-dire parallèle au plan général du badge 12 formant support de données.

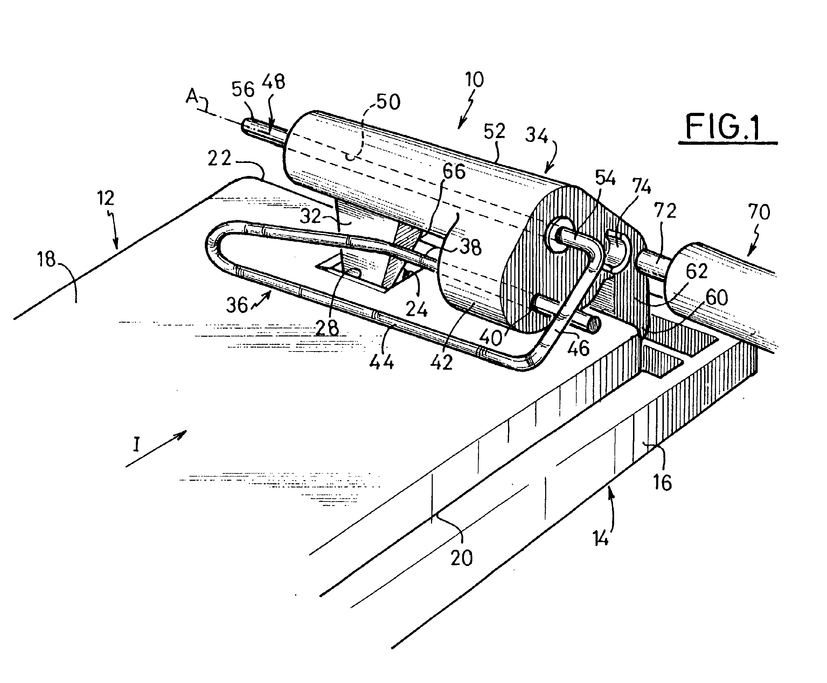

L'axe A de pivotement du levier 34 est donc fixe et le levier de blocage 34 est monté pivotant dans les deux sens autour de cet axe entre deux positions angulaires extrêmes stables qui sont illustrées à la figure 2 et respectivement aux figures 1 et 4.

Ces deux positions sont deux positions stables vers chacune desquelles le levier de blocage 34 est rappelé angulairement de manière élastique par un ressort de rappel bistable 36.

Dans l'exemple de réalisation illustré sur les figures, le ressort 36 est un ressort en fil plié qui présente une forme générale d'épingle à cheveu.

L'épingle comporte un premier brin principal et d'orientation transversale 38 qui est excentré par rapport à l'axe A et qui est décalé vers l'arrière par rapport à cet axe pour s'étendre dans un logement d'orientation transversale 40 formé dans une patte radiale 42 du levier de blocage 34.

Le second brin principal transversal 44 du ressort bistable 36 est décalé longitudinalement vers l'arrière par rapport au premier brin 38 et il se prolonge par un coude 46 à 180° puis par un brin transversal d'articulation 48 qui s'étend à travers un perçage 50 du corps 52 du levier de blocage 34.

Ainsi, le brin 48 constitue l'axe ou tige d'articulation du levier 34 autour de l'axe géométrique A et, à cet effet, ses deux extrémités transversales opposées 54 et 56 sont reçues dans des paliers (non représentés) du boîtier du dispositif qui reçoit le badge 12.

La première position stable du ressort bistable 36 illustrée à la figure 2 définit la première position stable escamotée du levier de blocage 34 dans laquelle son doigt de blocage 30 est escamoté, c'est-à-dire qu'il ne s'étend pas en regard du plan dans lequel se déplace le badge 12, ni bien entendu à l'intérieur de la fenêtre de blocage 24.

Comme on peut le voir sur les figures, le levier de blocage 34 comporte aussi un doigt de commande 60 qui est formé à l'extrémité libre d'un bras de commande 62 appartenant au levier de blocage 34 et qui est décalé angulairement, dans le sens anti-horaire en considérant la figure 2, par rapport au doigt de blocage 30 et qui est décalé transversalement par rapport à celui-ci comme on peut le voir sur la figure 1.

Comme on peut le voir sur les figures, en section longitudinale, le doigt de commande 60 présente un profil arrondi pour coopérer à la manière d'une came, par sa face arrière 64 avec le bord transversal avant 22 du badge 12.

De la même manière, en section longitudinale, le bord avant 66 du doigt de blocage 30 est incliné pour constituer une rampe formant came susceptible de coopérer avec le bord transversal avant 26 de la fente 24.

Conformément aux enseignements de l'invention, l'agencement comporte aussi des moyens de verrouillage du levier de blocage 34 en position stable bloquée.

Dans le mode de réalisation illustré sur les figures, les moyens de verrouillage sont illustrés schématiquement sous la forme d'un électroaimant 70 dont le noyau mobile (non représenté) est susceptible de commander une tige, ou doigt, de verrouillage 72 qui est normalement partiellement escamoté à l'intérieur du corps de l'électroaimant 70 (voir figure 1) et qui, en position de verrouillage, fait saillie transversalement vers l'extérieur, c'est-à-dire selon une direction parallèle à l'axe A d'articulation du levier de blocage 34, pour s'étendre en regard d'un prolongement transversal 74 du corps 52 du levier de blocage 34 pour empêcher alors tout pivotement de ce dernier dans le sens horaire à partir de sa position de blocage illustré à la figure 4.

On décrira maintenant le fonctionnement de l'agencement selon l'invention en référence aux figures 2 à 4.

Lorsqu'il n'y pas de badge 12 dans le boîtier du dispositif, le levier de blocage 34, sous l'action du ressort bistable 36, est dans sa position illustrée à la figure 2 dans laquelle le doigt de commande 60 s'étend sur le trajet du badge 12, c'est-à-dire en regard du bord transversal avant 22 de ce dernier.

Lorsque l'on introduit un badge 12 longitudinalement selon la direction I, c'est-à-dire de la gauche vers la droite en considérant la figure 2, le bord transversal avant 22 du badge 12 vient coopérer avec la face arrière 64 formant came de celui-ci pour provoquer un pivotement du levier de blocage 34, dans le sens anti-horaire, à l'encontre de l'effort élastique qui lui est appliqué par le ressort 36 qui tend à le rappeler vers sa première position stable escamotée illustrée à la figure 2.

Le mouvement d'introduction longitudinal du badge 12 se poursuit conformément à ce qui est illustré à la figure 3 sur laquelle on voit que le doigt de blocage 30 a commencé à pénétrer partiellement à l'intérieur de la fenêtre de blocage 24 au fur et à mesure du déplacement d'arrière en avant du badge 12 qui provoque concomitamment la rotation dans le sens anti-horaire du levier de blocage 34.

Au delà de la position intermédiaire illustrée à la figure 3, l'état stable initial du ressort bistable 36 va être dépassé et celui-ci va changer brusquement d'état pour atteindre son second état stable illustré à la figure 4.

De ce fait, le changement brusque d'état du ressort bistable 36 provoque un pivotement brusque du levier de blocage 34 qui atteint alors sa position stable de blocage illustrée à la figure 4.

Au cours de ce pivotement brusque, le doigt de blocage 30 (indépendamment de l'effort qui continue éventuellement d'être appliqué par l'utilisateur au badge 12 en vue de son introduction) entraîne le badge 12 longitudinalement d'arrière en avant du fait de la coopération du bord avant 66 du doigt de blocage 30 avec le bord transversal avant 26 de la fenêtre 24.

Comme on peut le voir sur les figures 3 et 4, la distance longitudinale D1 séparant le profil de came arrière 64 du doigt de commande 60 et le profil de came avant 66 du doigt de blocage 30 est sensiblement égale à la distance longitudinale D2 séparant le bord transversal avant 22 du badge 12 du bord transversal avant 26 de la fenêtre 24.

De ce fait, la position stable de blocage du levier de blocage 34 détermine, quasiment sans jeu, la position stable bloquée du badge 12 dans le boîtier 14, c'est-à-dire notamment par rapport à la plaque 16.

Dans la position angulaire stable de blocage illustré aux figures 1 et 4, il est ensuite possible de verrouiller le levier de blocage 34 dans cette position de blocage en provoquant la sortie complète du doigt de verrouillage 72 qui vient occuper sa position illustrée à la figure 4 dans laquelle il s'étend en regard de la surface concave de butée 74. Il est alors ainsi impossible de faire pivoter le levier de blocage 34 dans le sens horaire, c'est-à-dire qu'il est donc impossible de faire pivoter le levier 34 depuis sa position de blocage en direction de sa position escamotée.

Lorsque l'on désire extraire le badge 12 du dispositif de lecture et d'échange de données, il faut commencer par rétracter le doigt de verrouillage 72.

Ensuite, en partant de la position angulaire illustrée aux figures 1 à 4, l'utilisateur extrait longitudinalement d'arrière en avant, c'est-à-dire de la droite vers la gauche en considérant la figure 4, le badge 12.

Au cours du mouvement d'extraction, le bord transversal avant 26 de la fenêtre 24 agit sur le bord avant 66 du doigt de blocage 34 pour provoquer un pivotement du levier de blocage 34 dans le sens horaire.

Au cours de ce mouvement de pivotement dans le sens horaire, le ressort bistable 36 va être progressivement déformé pour quitter son second état stable illustré à la figure 4 et revenir brusquement à son premier état stable illustré à la figure 2. Ce mouvement inverse de pivotement brusque provoque alors le pivotement brusque du levier de blocage 34 jusqu'à sa position escamotée illustrée à la figure 2 dans laquelle le doigt de commande 30 n'est plus reçu dans la fenêtre de blocage 24 et dans laquelle il est donc possible d'extraire librement le badge 12 hors du dispositif qui le recevait précédemment.

Le ressort bistable 36 constitue donc ainsi un moyen économique d'assistance à l'introduction et à l'extraction du badge comme cela a été expliqué précédemment.

A titre de complément, non représenté sur les figures, il est possible de prévoir, dans le boîtier du dispositif, une butée fixe qui détermine une position longitudinale maximale d'introduction du badge 12 dans le dispositif afin notamment d'éviter que l'utilisateur n'exerce un effort nuisible sur le ressort bistable 36 au delà du second état stable de celui-ci illustré à la figure 4.

Outre sa fonction d'assistance évoquée plus haut, le ressort bistable 36 procure aussi une sensation tactile à l'utilisateur lors de l'introduction et lors de l'extraction.

L'invention trouve notamment à s'appliquer à bord d'un véhicule automobile dont les fonctions d'antivol sont partiellement ou totalement assurées par traitement de données dont certaines, contenues dans le support ou badge 12, sont représentatives d'un utilisateur autorisé, ou d'un groupe d'utilisateurs autorisés, du véhicule.

Le traitement des données vise notamment à comparer les données contenues dans le badge 12 avec des données mémorisées à bord du véhicule en vue de permettre l'utilisation autorisée du véhicule, le ou les circuits de traitement assurant la commande totale ou partielle de moyens formant antivol, qu'il s'agisse d'un antivol classique, c'est-à-dire agissant sur la colonne de direction du véhicule, et/ou de moyens empêchant le démarrage du moteur du véhicule et/ou interrompant le fonctionnement du moteur.

## Revendications

1. Agencement (10) pour l'échange de données entre un support de données rigide (12), ou semi-rigide, et un dispositif d'échange de données (14, 16) comportant un boîtier dans lequel le support en forme générale de carte est introduit manuellement dans un logement du boîtier dans lequel il occupe une position active déterminée, et dans lequel le dispositif comporte des moyens pour retenir longitudinalement le support de données (12) en position active dans le boîtier et des moyens (36) d'assistance à l'introduction et à l'extraction du support de données, le support de données (12) comportant une fenêtre (24), **caractérisé en ce que** le boîtier comporte un levier (34) de blocage du support (12) qui est monté pivotant, autour d'un axe (A), entre une position stable de blocage vers laquelle le levier de blocage (34) est rappelé élastiquement et dans laquelle un doigt de blocage (30) formé à l'extrémité libre d'un bras du levier de blocage (34) s'étend verticalement à l'intérieur de la fenêtre (24), et une position stable escamotée vers laquelle le levier de blocage (34) est rappelé élastiquement et dans laquelle le doigt de blocage (36) est situé hors de la fenêtre (24) pour permettre l'extraction du support de données hors du boîtier.

2. Agencement selon la revendication 1, **caractérisé en ce que** l'axe de pivotement du levier (34) de blocage est parallèle au plan dans lequel est située la direction longitudinale d'introduction (I) du support de données.

3. Agencement selon la revendication précédente, **caractérisé en ce que** le levier de blocage (34) est rappelé élastiquement vers ses deux positions stables de blocage et escamotée par un ressort bistable (36).

4. Agencement selon la revendication 3, **caractérisé en ce que** l'axe (A) de pivotement du levier de blocage (34) est perpendiculaire à la direction longitudinale (I) d'introduction du support de données (12).

5. Agencement selon la revendication 4, **caractérisé en ce que,** lors de l'introduction du support de données (12) dans le boîtier, le pivotement du levier de blocage (34), à partir de sa position stable escamotée, est commandé par la coopération d'un bord transversal avant (22) du support de données (12) avec un profil de came arrière (64) d'un doigt de commande (60) du levier de blocage (34) qui est décalé angulairement par rapport au doigt de blocage (30).

6. Agencement selon l'une des revendications 4 ou 5, **caractérisé en ce que,** lors de l'extraction du support de données, le pivotement du levier de blocage (34), à partir de sa position stable de blocage, est commandé par la coopération d'un bord transversal avant (26) de la fenêtre (24) avec un profil de came avant (66) du doigt de blocage.

7. Agencement selon les revendications 5 et 6, **caractérisé en ce que,** en position de blocage du levier de blocage, la distance longitudinale (D1) séparant le profil de came arrière (64) du doigt de commande (60) et le profil de came avant (66) du doigt de blocage (30) est sensiblement égale à la distance longitudinale (D2) séparant le bord transversal avant (22) du support de données du bord transversal avant (26) de la fenêtre (24).

8. Agencement selon l'une quelconque des revendications précédentes, **caractérisé en ce que** le dispositif comporte un organe commandé (70, 72) de verrouillage du levier de blocage (34) dans sa position angulaire de blocage du support de données (12).

9. Agencement selon la revendication précédente, **caractérisé en ce que** l'organe commandé de verrouillage est un électroaimant dont le noyau mobile (72) constitue un doigt de verrouillage qui peut être commandé en saillie à l'extérieur du boîtier de l'électroaimant (70) pour s'étendre en regard d'une partie (74) du levier de blocage afin d'empêcher la rotation de ce dernier de sa position de blocage vers sa position escamotée.

10. Agencement selon la revendication 9 prise en combinaison avec la revendication 4, **caractérisé en ce que** l'axe de déplacement du noyau mobile (72) de l'électroaimant (70) est parallèle à l'axe (A) de pivotement du levier de blocage.

11. Agencement selon l'une quelconque des revendications 3 à 10, **caractérisé en ce que** le ressort bistable (36) est un ressort en fil en épingle à cheveux dont un premier brin principal transversal (38) traverse un trou excentré (40) du levier de blocage (34), et dont le second brin transversal principal (44) se prolonge par un coude à 180° (46) puis par un brin transversal (50) d'articulation qui traverse le corps (52) du levier de blocage (34) pour constituer l'axe d'articulation de ce levier.

12. Agencement selon l'une quelconque des revendications précédentes, **caractérisé en ce qu'**il équipe un véhicule automobile dont les fonctions d'antivol sont partiellement ou totalement assurées par traitement de données dont certaines, contenues dans le support de données (12), sont représentatives d'un utilisateur autorisé, ou d'un groupe d'utilisateurs autorisés, du véhicule.

## Claims

1. Arrangement (10) for the interchange of data between a rigid or semi-rigid data medium (12) and a data interchange device (14, 16) comprising a unit into which the medium, generally in the form of a card, is introduced manually into a housing in the unit in which it occupies a determined active position, and in which the device comprises means for longitudinally holding the data medium (12) in an active position in the unit and means (36) providing assistance with introducing and extracting the data medium, the data medium (12) having a window (24), **characterized in that** the unit comprises a lever (34) for immobilizing the medium (12) which is mounted so that it can pivot, about an axis (A), between a stable immobilizing position towards which the immobilizing lever (34) is elastically returned and in which an immobilizing finger (30) formed at the free end of one arm of the immobilizing lever (34) extends vertically into the window (24), and a stable retracted position towards which the immobilizing lever (34) is elastically returned and in which the immobilizing finger (36) is outside the window (24), to allow the data medium to be extracted from the unit.

2. Arrangement according to Claim 1, **characterized in that** the axis of pivoting of the immobilizing lever (34) is parallel to the plane in which the longitudinal direction of introduction (I) of the data medium lies.

3. Arrangement according to the preceding claim, **characterized in that** the immobilizing lever (34) is elastically returned towards its two stable, immobilizing and retracted, positions, by a bistable spring (36).

4. Arrangement according to Claim 3, **characterized in that** the axis (A) of pivoting of the immobilizing lever (34) is perpendicular to the longitudinal direction of introduction (I) of the data medium (12).

5. Arrangement according to Claim 4, **characterized in that** when introducing the data medium (12) into the unit, the pivoting of the immobilizing lever (34) from its retracted stable position is brought about by cooperation between a front transverse edge (22) of the data medium (12) and a rear cam profile (64) of an operating finger (60) of the immobilizing lever (34) which is angularly offset with respect to the immobilizing finger (30).

6. Arrangement according to one of Claims 4 and 5, **characterized in that,** when extracting the data medium, the pivoting of the immobilizing lever (34) from its stable immobilizing position is brought about by the cooperation between a front transverse edge (26) of the window (24) and a front cam profile (66) of the immobilizing finger.

7. Arrangement according to Claims 5 and 6, **characterized in that** when the immobilizing lever is in the immobilizing position, the longitudinal distance (D1) between the rear cam profile (64) of the operating finger (60) and the front cam profile (66) of the immobilizing finger (30) is substantially equal to the longitudinal distance (D2) between the front transverse edge (22) of the data medium and the front transverse edge (26) of the window (24).

8. Arrangement according to any one of the preceding claims, **characterized in that** the device comprises an operated member (70, 72) for locking the immobilizing lever (34) in its angular position in which it immobilizes the data medium (12).

9. Arrangement according to the preceding claim, **characterized in that** the operated locking member is an electromagnet, the core plunger (72) of which constitutes a locking finger which can be made to project from the housing of the electromagnet (70) to extend out facing a part (74) of the immobilizing lever so as to prevent the latter from rotating from its immobilizing position into its retracted position.

10. Arrangement according to Claim 9 taken in conjunction with Claim 4, **characterized in that** the axis of displacement of the core plunger (72) of the electromagnetic (70) is parallel to the axis (A) of pivoting of the immobilizing lever.

11. Arrangement according to any one of Claims 3 to 10, **characterized in that** the bistable spring (36) is a hairpin spring, a first transverse main leg (38) of which passes through an off-centred hole (40) in the immobilizing lever (34), and the second main transverse leg (44) of which is extended by a 180° bend (46) then by a transverse articulating leg (50) which passes through the body (52) of the immobilizing lever (34) to constitute the axis about which this lever is articulated.

12. Arrangement according to any one of the preceding claims, **characterized in that** it is fitted to a motor vehicle in which the anti-theft functions are partially or completely fulfilled by data processing, some of which data, contained in the data medium (12), represents an authorized user or a group of authorized users of the vehicle.

## Patentansprüche

1. Anordnung (10) für den Datenaustausch zwischen einem starren oder halbstarren Datenträger (12) und einer Datenaustausch-Vorrichtung (14, 16), die ein Gehäuse umfasst, in welches der Träger in allgemeiner Kartenform von Hand in eine Aufnahme des Gehäuses eingeführt wird, in welchem es eine bestimmte aktive Position einnimmt und in welcher die Vorrichtung Mittel, um den Datenträger (12) in aktiver Position im Gehäuse in Längsrichtung zurückzuhalten, und Hilfsmittel (36) für das Einführen und das Herausziehen des Datenträgers (12) umfasst, wobei der Datenträger (12) ein Fenster (24) umfasst, **dadurch gekennzeichnet, dass** das Gehäuse einen Hebel (34) zum Blockieren des Trägers (12) umfasst, der um eine Achse (A) zwischen einer stabilen Blockierungsposition, zu der hin der Blockierungshebel (34) elastisch zurückgestellt wird und in der sich ein am freien Ende eines Arms des Blockierungshebels (34) ausgebildeter Blockierungszapfen (30) vertikal ins Innere des Fensters (24) erstreckt, und einer eingezogenen stabilen Position schwenkbar angebracht ist, zu der hin der Blockierungshebel (34) elastisch zurückgestellt wird und in welcher sich der Blockierungszapfen (36) außerhalb des Fensters (24) befindet, um das Herausziehen des Datenträgers aus dem Gehäuse zu gestatten.

2. Anordnung nach Anspruch 1, **dadurch gekennzeichnet, dass** die Schwenkachse des Blockierungshebels (34) zu der Ebene parallel ist, in welcher sich die Längsrichtung des Einführens (I) des Datenträgers befindet.

3. Anordnung nach dem vorhergehenden Anspruch, **dadurch gekennzeichnet, dass** der Blockierungshebel (34) von einer bistabilen Feder (36) zu seinen beiden stabilen Blockierungs- und eingezogenen Positionen hin elastisch zurückgestellt wird.

4. Anordnung nach Anspruch 3, **dadurch gekennzeichnet, dass** die Schwenkachse (A) des Blockierungshebels (34) zur Längsrichtung (I) des Einführens des Datenträgers (12) senkrecht ist.

5. Anordnung nach Anspruch 4, **dadurch gekennzeichnet, dass** bei Einführen des Datenträgers (12) in das Gehäuse das Schwenken des Blockierungshebels (34) ausgehend von seiner eingezogenen stabilen Position durch das Zusammenwirken eines vorderen Querrandes (22) des Datenträgers (12) mit einem hinteren Nockenprofil (64) eines Steuerzapfens (60) des Blockierungshebels (34) gesteuert wird, der in Bezug auf den Blockierungshebel (30) winkelversetzt ist.

6. Anordnung nach einem der Ansprüche 4 oder 5, **dadurch gekennzeichnet, dass** beim Herausziehen des Datenträgers das Schwenken des Blockierungshebels (34) ausgehend von seiner stabilen Blockierungsposition durch das Zusammenwirken eines vorderen Querrandes (26) des Fensters (24) mit einem vorderen Nockenprofil (66) des Blockierungszapfens gesteuert wird.

7. Anordnung nach den Ansprüchen 5 und 6, **dadurch gekennzeichnet, dass** in der Blockierungsposition des Blockierungshebels der Abstand (D1) in Längsrichtung, der das hintere Nockenprofil (64) des Steuerzapfens (60) und das vordere Nockenprofil (66) des Blockierungszapfens (30) trennt, im Wesentlichen gleich dem Abstand (D2) in Längsrichtung ist, der den vorderen Querrand (22) des Datenträgers vom vorderen Querrand (26) des Fensters (24) trennt.

8. Anordnung nach einem der vorhergehenden Ansprüche, **dadurch gekennzeichnet, dass** die Vorrichtung eine gesteuerte Einrichtung (70, 72) zur Verriegelung des Blockierungshebels (34) in seiner Winkelposition zur Blockierung des Datenträgers (12) umfasst.

9. Anordnung nach dem vorhergehenden Anspruch, **dadurch gekennzeichnet, dass** die gesteuerte Verriegelungseinrichtung ein Elektromagnet ist, dessen beweglicher Kern (72) einen Verriegelungszapfen bildet, der auf dem Äußeren des Gehäuses des Elektromagneten (70) aufliegend so gesteuert werden kann, dass er sich einem Teil (74) des Blockierungshebels gegenüberliegend erstreckt, um die Drehung dieses letzteren aus seiner Blockierungsposition zu seiner eingezogenen Position zu verhindern.

10. Anordnung nach Anspruch 9, in Kombination mit Anspruch 4, **dadurch gekennzeichnet, dass** die Verschiebungsachse des beweglichen Kerns (72) des Elektromagneten (70) zur Schwenkachse (A) des Blockierungshebels parallel ist.

11. Anordnung nach einem der Ansprüche 3 bis 10, **dadurch gekennzeichnet dass** die bistabile Feder (36) eine Haarnadel-Drahtfeder ist, deren erster Haupteinzeldraht (38) in Querrichtung durch ein exzentrisches Loch (40) des Blockierungshebels (34) hindurchgeht und deren zweiter Haupteinzeldraht (44) in Querrichtung sich durch eine Krümmung um 180° (46), dann durch einen Schwenkeinzeldraht (50) in Querrichtung verlängert, der durch den Körper (52) des Blockierungshebels (34) hindurchgeht, um die Schwenkachse dieses Hebels zu bilden.

12. Anordnung nach einem der vorhergehenden Ansprüche, **dadurch gekennzeichnet, dass** sie ein Kraftfahrzeug ausstattet, dessen Diebstahlsicherungsfunktionen teilweise oder vollständig durch Verarbeitung von Daten sichergestellt werden, von denen bestimmte, die im Datenträger (12) enthalten sind, für einen zugelassenen Benutzer oder eine Gruppe von zugelassenen Benutzern des Fahrzeugs repräsentativ sind.
